# EUROPÄISCHE PATENTSCHRIFT

(11) **EP 0 883 458 B1**
(45) Veröffentlichungstag und Bekanntmachung des Hinweises auf die Patenterteilung: **08.09.1999**
(21) Anmeldenummer: 97903138.2
(22) Anmeldetag: 19.02.1997
(51) Int. Cl.: B23D 45/14, B23D 45/20

(54) **VERFAHREN ZUR HERSTELLUNG VON FORMSTÜCKEN**
METHOD FOR THE MANUFACTURING OF MOULDED MEMBERS
PROCEDE DE FABRICATION DE PIECES MOULEES

(30) Priorität: 20.02.1996 AT 31196
(43) Veröffentlichungstag der Anmeldung: 16.12.1998
(73) Patentinhaber: Technoplast Kunststofftechnik Gesellschaft m.b.H., 4563 Micheldorf (AT)
(72) Erfinder: SCHWAIGER, Meinhard, A-4020 Linz (AT); MAYRHOFER, Franz-Xaver, A-4644 Scharnstein (AT)
(74) Vertreter: Babeluk, Michael, Dipl.-Ing. Mag., Patentanwälte Babeluk - Krause
(86) Internationale Anmeldenummer: AT9700029
(87) Internationale Veröffentlichungsnummer: WO9730816

(56) Entgegenhaltungen:
- DE-A- 2 204 566
- DE-A- 2 321 020
- DE-A- 4 426 750
- DE-U- 9 416 948
- FR-A- 2 409 138

## Beschreibung

Die Erfindung betrifft ein Verfahren zur Herstellung von Formstücken zur Erzeugung von Kunststoff-Fenstern, bestehend aus folgenden Schritten:
- Extrudieren und Kalibrieren einer Kunststoffmasse zu einem Profil;
- Zurechtschneiden des Profils in Stücke gewünschter Länge und Durchführung von Gehrungsschnitten zur Anordnung der Stirnflächen der Formstücke in einem bestimmten Winkel zur Profilachse. Die Erfindung betrifft auch eine Vorrichtung zur Herstellung von Formstücken zur Erzeugung von Kunstoff-Fenstern gemäß Oberbegriff von Patentanspruch 7.

Bei der Herstellung von Kunststoff-Fenstern, Rahmen von Kunststoff-Fenstern, Kunststofftüren oder dgl., werden im allgemeinen Formstücke, die an ihren Enden mit einer Gehrung im Winkel von 45 Grad versehen sind, in entsprechenden Schweißmaschinen zusammengefügt. Die Herstellung der Formstücke erfolgt dabei in der Weise, daß in einer Extrusionslinie ein Kunststoffprofil hergestellt wird, aus dem die entsprechenden Formstücke geschnitten werden. Die Extrusionslinie besteht aus einem Extruder, Form- und Kalibrierwerkzeugen, einer Kühlstrecke, innerhalb der das noch weiche Profil bis zur Formbeständigkeit abgekühlt wird, und einem Raupenabzug, der die entsprechenden Kräfte auf das Profil ausübt, um die Widerstände in den Kalibrierblenden zu überwinden.

Bei einem herkömmlichen Verfahren zur Herstellung von Formstücken ist im Anschluß an den Raupenabzug eine Säge vorgesehen, die das Profil in Profilstangen schneidet, die üblicherweise etwa 6 m lang sind. Diese Profilstangen werden zwischengelagert und später in einem weiteren Bearbeitungsschritt zu Formstücken verarbeitet, in dem die Gehrungsschnitte durchgeführt werden. Die Zwischenlagerung dient einerseits dazu, den Schrumpfungsprozeß abzuwarten, dem das Profil in den ersten 24 bis 48 Stunden nach dem Verlassen des Extrusionslinie unterliegt, und andererseits dazu, die Herstellung der Formstücke von der Extrusionslinie zu entkoppeln. Es werden an die Genauigkeit der Formstücke im allgemeinen hohe Anforderungen gestellt, so wird üblicherweise eine Längenänderung von maximal +/- 0,15 mm toleriert. Eine solche exakte Bearbeitung ist an den fertigen 6 m Stangen, die keinem Schrumpfvorgang mehr unterliegen, relativ leicht möglich. Nachteilig ist jedoch der erhöhte logistische Aufwand für die Zwischenlagerung und der zwangsläufig auftretende Abfall, da die 6 m langen Stangen naturgemäß nicht vollständig verarbeitet werden können.

Dem Stand der Technik entsprechend werden zur Minimierung des Abfalls Zuschnittoptimierungen vorgenommen; in Abhängigkeit von der Optimierungsgröße und dem angewandten mathematischen Optimierungsmodell werden 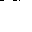 Optimierungsverschnitte" in der Größenordnung von ca. 0,5 bis mehrere % erreicht. Zusätzlich zu diesem Abfall kommt noch ein weiterer Profilabfall hinzu, der durch die minimal erforderliche Einspannlänge am Profilende bestimmt ist (überlicherweise ca.20 bis 50mm). Werden Optimierungsverfahren zur Abfallreduzierung angewandt, besteht ein weiterer Nachteil infolge 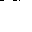 chaotischer" Profilstabproduktion, weil die unmittelbar aufeinanderfolgenden Profilzuschnitte nicht zu einem Fenster gehören müssen; dies bedeutet, daß bei Verschnitt-(Abfall-)optimierter Fertigung ein zusätzlicher Sortieraufwand entsteht (Sortierwagen, Handlingaufwand, Platzbedarf, Verwechslungsgefahr).

Aus der FR-A 2 409 138 ist eine Gehrungssäge bekannt, bei der zwei zur Profilachse geneigte Sägeblätter vorgesehen sind. Der Abstand zwischen den beiden Sägeblättern ist so einstellbar, daß das zwischen den Sägeblättern verbleibende Profilstück die gewünschten Abmessungen aufweist. Mit einer solchen Vorrichtung ist es zwar möglich, relativ genau Profilabschnitte gewünschter Länge herzustellen, der Platzbedarf ist jedoch beträchtlich. Der Verstellbereich der beiden Sägen muß so groß sein, daß die Profilabschnitte maximaler Länge geschnitten werden können. Zusätzlich dazu kommt der Weg um den die Sägen während des Schnittes Verfahren werden müssen. Der für eine solche Anlage erforderlich Bauraum steht in vielen Fällen nicht zur Verfügung.

Aus der DE-U 94 16 948 ist eine Doppelsäge mit zwei miteinander verbundenen Sägeblättern bekannt. Die Sägeblätter sind dabei in einer Ebene angeordnet und überstreichen jeweils einen Teil der Querschnittsfläche des Profils. Auf diese Weise kann ein sehnellerer Schnittvorgang erreicht werden. Die Herstellung von Profilstücken, die auf Gehrung geschnitten sind, ist hier nicht angesprochen.

Weiters ist aus der DE-A 2 321 020 eine Klinkschnittsäge bekannt, mit deren Hilfe eine V-förmiger Ausschnitt in Kunststoff-Fenster-Profilen hergestellt werden kann. Dabei ist eine Kreissäge schwenkbar so aufgehängt, daß die beiden erforderlichen Schnitte, die jeweils in einem Winkel von 45° zur Profilachse angeordnet sind, von derselben Säge durchgeführt werden können. Während des Schneidvorganges ist das Profil an einem Aufspanntisch aufgespannt. Für eine kontinuierliche Produktion ist eine solche Lösung daher nicht geeignet.

Weiters beschreibt die DE-A 22 04 566 eine Schneidemaschine und ein Schneidverfahren, mit dem Rohre während der Extrusion abgeschnitten werden können. Eine entsprechende Schneidevorrichtung ist dabei auf einem Schlitten befestigt, der zusammen mit dem Rohr bewegt werden kann. Mit einer solchen Einrichtung sind Rohre gewünschter Länge herstellbar, es ist jedoch nicht möglich, fertige Fensterprofile herzustellen.

Ferner zeigt die EP-A 0 004 193 eine Vorrichtung zum Schneiden von plattenförmigen Materialien mit mehreren Kreissägen. Auch hier ist keinerlei Anregung für die Herstellung von Fensterprofilen gegeben.

Aufgabe der vorliegenden Erfindung ist es, die vorgenannten Nachteile zu vermeiden und ein Verfahren zur Herstellung von Formstücken zu schaffen, das leistungsfähig und genau ist und das die Abfallmenge minimiert, sowie eine Vorrichtung zur Durchführung des Verfahrens vorzuschlagen.

Eine weitere Aufgabe der Erfindung besteht darin, den Umfang weiterer Verarbeitungsschritte nach der Herstellung der Formstücke so weit als möglich zu verringern.

Erfindungsgemäß wird diese Aufgabe dadurch gelöst, daß das Zurechtschneiden durch eine Doppelsäge erfolgt, die mit der Geschwindigkeit des aus der Extrusionsanlage austretenden Profils in der Längsrichtung des Profils bewegt wird, und die die nachlaufende Stirnfläche eines Formstückes in einem Arbeitsgang mit der vorlaufenden Stirnfläche des nächsten Formstückes unter Berücksichtigung der jeweiligen Gehrungswinkel schneidet. Vorzugsweise erfolgt zusätzlich zu den Gehrungsschnitten ein weiterer Bearbeitungsvorgang.

Grundidee der Erfindung ist es, die Herstellung von Zwischenprodukten, nämlich der Profilstangen, vollständig zu vermeiden. Dabei wird der Sortieraufwand verringert und die Abfallmenge reduziert. Durch das erfindungsgemäße Verfahren wird es bei den derzeit geforderten Extrusionsgeschwindigkeiten, die 5 m/min. und mehr betragen können, möglich, Formstücke der gewünschten Länge mit der geforderten Genauigkeit in line herzustellen.

Insbesonders ist es zur Steigerung der Genauigkeit erforderlich, die zu erwartende Schrumpfung des Profils zu schätzen, bzw. experimentell zu bestimmen und bei der Steuerung der Vorrichtung zu berücksichtigen. Bei der Produktion müssen daher sämtliche für die Schrumpfung relevanten Parameter soweit als möglich konstant gehalten werden.

Detailliert beschrieben wird der Tisch folgendermaßen gesteuert:
- Messen einer Geschwindigkeit, mit der das Profil aus der Extrusionsanlage austritt;
- Beschleunigen des Tisches auf die Extrusionsgeschwindigkeit des Profils und Einregeln der Vorschubgeschwindigkeit des Tisches auf die Extrusionsgeschwindigkeit;
- Durchführen des Schnittvorganges nach dem Herstellen des Gleichlaufes zwischen Tisch und Profil, wobei durch eine quer zur Profilachse bewegte Doppelsäge die Stirnfläche zweier aufeinanderfolgender Formstücke geschnitten werden;
- Zurückbewegen der Säge in ihre Ausgangsstellung;
- Stoppen und Zurückfahren des Tisches in seine Ausgangsstellung;
- Bestimmen des Startpunktes für das Auslösen des nächsten Schnittvorganges aufgrund der geforderten Länge des jeweiligen Formstückes.

Es ist wesentlich, daß während des Schneidvorganges eine genaue Geschwindigkeitsregelung des Tisches in Bezug auf die Extrusionsgeschwindigkeit des Profils durchgeführt wird, um einen sauberen Schnitt und die erforderliche Genauigkeit zu erhalten. Das Profil wird zwar während des Schnittes vorzugsweise am Tisch festgeklemmt, doch dient dieses Festklemmen im Grunde genommen nur dazu, ein Ausweichen des Profils zufolge der Schneidkräfte zu verhindern. In Axialrichtung des Profils sollten während des Schneidvorganges keine Kräfte auftreten. Wenn der Schneidvorgang beendet ist, wird der Tisch angehalten und mit einer vorherbestimmten Maximalgeschwindigkeit wieder in seine Ausgangsstellung bewegt. Die Einstellung der Länge des Profilstückes erfolgt durch Auswahl eines geeigneten Startzeitpunktes für das Hochfahren des Antriebsmotors für den Tisch. Das Hochfahren erfolgt über eine entsprechende Rampe in kürzest möglicher Zeit.

In einer bevorzugten Variante des erfindungsgemäßen Verfahrens besteht der zusätzliche Bearbeitungsvorgang darin, daß ein V-förmiger Einschnitt zur Aufnahme eines Kämpfers durchgeführt wird. Dies ist in einfacher Weise dadurch möglich, daß die Sägen in einer Richtung quer zur Profilachse und quer zur Schnittrichtung verschoben werden, so daß das Profil nicht vollständig durchgetrennt wird, sondern eine V-förmige Ausnehmung erzeugt wird. In diese Ausnehmung wird später ein Kämpfer eingesetzt.

Eine besonders große Verringerung der notwendigen Nachbearbeitungen kann erreicht werden, wenn gleichzeitig mit den Gehrungsschnitten Entwässerungsschlitze gefräst werden.

Weiters betrifft die vorliegende Erfindung eine Vorrichtung zur Herstellung von Formstücken zur Erzeugung von Kunststoff-Fenstern, die folgende Bauteile aufweist:
- eine Führung, entlang der ein von einer Extrusionsanlage extrudiertes Profil durch die Vorrichtung geführt werden kann;
- einen Sägetisch, der in der Richtung der Führung hin und her beweglich ist;
- eine auf dem Tisch angeordnete Säge, die quer zur Richtung der Bewegung beweglich ist, um das Profil zu schneiden;
- wobei die Säge als Doppelsäge ausgebildet ist, deren Sägeblätter in einem vorbestimmten Winkel zueinander und zur Profilachse angeordnet sind, um die Stirnflächen der Formstücke entsprechend der gewünschten Gehrungswinkel zu schneiden

Bei der Meßvorrichtung handelt es sich beispielsweise um ein Meßrad, das auf dem Profil nach dem Raupenabzug abrollt. Ein entsprechender Winkelgeber auf dem Meßrad ermöglicht die genaue Bestimmung des Vorschubes. Wenn das Signal differenziert wird, dann kann daraus die Vorschubgeschwindigkeit gewonnen werden.

Erfindungsgemäß ist dabei eine Meßvorrichtung zur Bestimmung der Bewegungsgeschwindigkeit des Profils und vorzugsweise sind Mittel zur Durchführung von weiteren Bearbeitungsvorgängen vorgesehen.

Durch die erfindungsgemäße Ausbildung wird erreicht, daß auch bei hohen Extrusionsgeschwindigkeiten und kurzen Formstücken gewährleistet ist, daß der gesamte Bearbeitungszyklus vom Beschleunigen des Tisches über das Schneiden bis zum Zurückfahren des Tisches in die Ausgangsstellung so schnell durchgeführt werden kann, daß der nächste Bearbeitungszyklus rechtzeitig begonnen werden kann. Der Verschnitt wird minimiert, da im wesentlichen nur prismatische Körper mit einer Grundfläche eines gleichschenkelig rechtwinkeligen Dreiecks abfallen. Sieht man von der Breite der Sägeblätter selbst ab, ist kein Abstand zwischen zwei aufeinanderfolgenden Formstücken erforderlich.

Wenn Mittel vorgesehen sind, um weitere Bearbeitungsvorgänge während des Schneidvorganges durchzuführen, kann eine weitere Optimierung des Herstellungsvorganges erreicht werden, da sich die Nachbearbeitung der Profile entsprechend vereinfacht.

Im allgemeinen werden die Gehrungen in einem Winkel von 45 ° zur Profilachse geschnitten. Daher stehen die Schneidebenen der beiden Sägen rechtwinkelig zueinander. Dies stellt den allgemeinen Fall bei Formstücken für rechteckige Fenster o. dgl. dar.

Um die Lage des Profils unabhängig von den auftretenden Schneidkräften konstant zu halten, ist es bevorzugt, wenn am Tisch eine Klemmvorrichtung zum Halten des Profils während der Schnitte vorgesehen ist.

Die Genauigkeit des Schnittes kann weiter verbessert werden, wenn ein Weggeber vorgesehen ist, der zur Bestimmung der jeweiligen Position des Tisches ausgebildet ist. Grundsätzlich kann die jeweilige Position des Tisches aufgrund der Signale bestimmt werden, die die Bewegung des Tisches steuern. Es ist jedoch vorteilhaft, die tatsächliche Stellung über einen gesonderten Weggeber zu bestimmen. Dieser ist beispielsweise als Drehgeber ausgebildet, der die Winkelstellung der Antriebsspindel erfaßt, die den Tisch bewegt.

Als besonders günstig hat sich herausgestellt, wenn der Antrieb des Tisches durch einen frequenzgesteuerten Synchronmotor erfolgt. Auf diese Weise kann mit relativ einfachen Mitteln eine ausreichende Genauigkeit erreicht werden. Für spezielle Anforderungen ist es jedoch auch möglich, für den Antrieb des Tisches einen Servomotor einzusetzen. Auf diese Weise können steilere Anfahrtsrampen gefahren werden, und auch die Rückstellbewegung des Tisches kann beschleunigt erfolgen.

In einer besonders günstigen Ausführungsvariante der Erfindung ist vorgesehen, daß die als Kreissägen ausgebildeten Sägen in einer im wesentlichen senkrechten Richtung gegenüber dem Tisch verschiebbar angeordnet sind, daß die Achsen der Kreissägen im wesentlichen waagrecht sind, und daß zwischen den Sägeblättern ein Raum vorgesehen ist, durch den das Profil hindurchtreten kann.

Zu Zeitpunkten, in denen nicht geschnitten wird, tritt dabei das Profil zwischen den beiden Kreissägeblättern hindurch. Ist dann die Bewegung des Tisches mit dem Vorschub des Profils synchronisiert, bewegen sich die Sägen zunächst nach unten, so daß die obere Säge den Schneidvorgang durchführt. Im Anschluß daran bewegen sich die Sägen über die Mittelstellung hinaus nach oben, so daß die untere Säge den Schneidvorgang durchführt. Es ist offensichtlich, daß dieser Vorgang auch in der umgekehrten Reihenfolge stattfinden kann.

Alternativ dazu ist es möglich, daß die als Kreissägen ausgebildeten Sägen, in einer im wesentlichen waagrechten Richtung gegenüber dem Tisch verschiebbar angeordnet sind, und daß die beiden Sägen in einer Ausgangsstellung im wesentlichen neben dem Profil angeordnet sind. Bei dieser Variante wird an den Seiten des Profils mehr Platz benötigt.

Ausschnitte zur Aufnahme von Kämpfern können dadurch leicht erzeugt werden, daß Führungen zur Verschiebung der Sägeblätter quer zur Profilachse vorgesehen sind.

Bei Fenstern, die aus sogenannten Z-Profilen zusammengesetzt sind, ist es fallweise erforderlich, daß der Schnitt teilweise unter 45° und teilweise rechtwinkelig zu der Profilachse erfolgt. Dies kann dadurch erreicht werden, daß eine der beiden Sägen in eine Richtung normal zur Profilachse verschwenkbar ist.

In einer besonders begünstigten Ausführungsvariante der Erfindung sind am Tisch angeordnete Fräser vorgesehen, die dazu ausgebildet sind, während der Durchführung der Gebrungsschnitte Bohrungen oder Schlitze am Profil anzubringen. Auf diese Weise können die erforderlichen Entwässerungsschlitze während des Schneidvorganges durchgeführt werden.

Alternativ zur Bearbeitung der Profile mittels Fräswerkzeugen können Bearbeitungen auch mittels Stanzwerkzeugen ausgeführt werden.

In der Folge wird die Erfindung anhand der in den Figuren dargestellten Ausführungsbeispiele näher erläutert. Die Figuren zeigen schematisch:
- Fig. 1: den grundsätzlichen Aufbau einer Extrusionslinie mit der erfindungsgemäßen Vorrichtung;
- Fig. 2: eine seitliche Ansicht einer Ausführungsvariante einer erfindungsgemäßen Vorrichtung;
- Fig. 3: eine Ansicht der Vorrichtung von Fig. 2 von oben;
- Fig. 4: eine Ansicht einer anderen Ausführungsvariante der erfindungsgemäßen Vorrichtung von oben;
- Fig. 5: ein Detail der Fig.3 in vergrößertem Maßstab;
- Fig. 6: den grundsätzlichen Aufbau eines Fensterrahmens, bestehend aus vier Formstücken mit diversen Ausfräsungen;
- Fig. 7: eine weitere Ausführungsvariante der Erfindung in einer Ansicht entsprechend der Fig.3 und
- Fig. 8: eine teilweise Ansicht der Ausführungsvariante von Fig.7 in Axialrichtung; und
- Fig. 9: eine weitere Ausführungsvariante der Erfindung in einer Ansicht entsprechend der Fig.3.

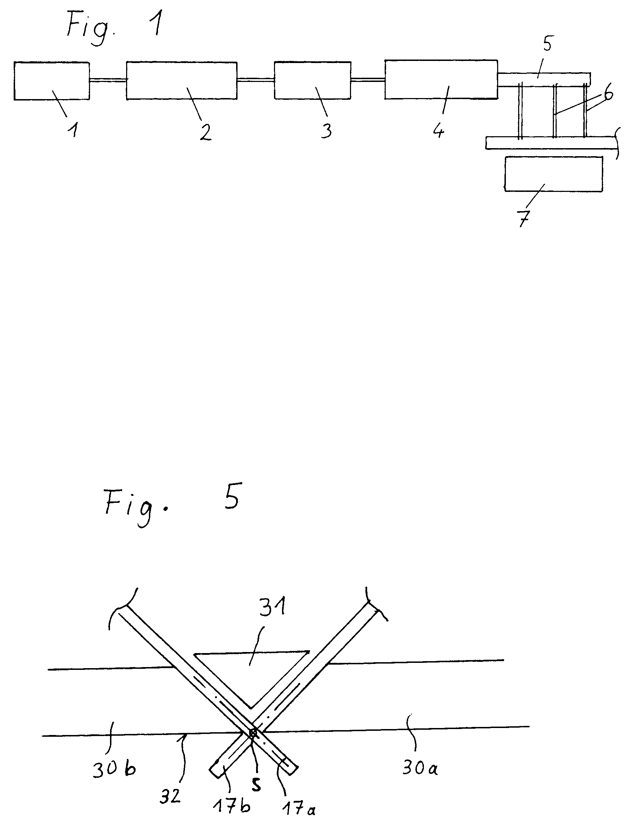

Die Gesamtanlage zur Herstellung der Formstücke besteht gemäß Fig. 1 aus einem Extruder 1, aus einer daran anschließenden Kalibrier- und Kühleinheit 2, einem Raupenabzug 3 sowie der Vorrichtung 4 zum Zurechtschneiden der Profilstücke. Anschließend an die Vorrichtung 4 ist ein Förderband 5, das eine größere Fördergeschwindigkeit aufweist, als die Extrusionsgeschwindigkeit des Profils. Ein Querförderer 6 transportiert die vereinzelten Profilstücke zu einer Bearbeitungsvorrichtung 7, die die entsprechenden Löcher bohrt, Schlitze fräst, usw. Die Taktzeit der Bearbeitungsvorrichtung 7 muß dabei der Extrusionsgeschwindigkeit und der Länge der hergestellten Formstücke angepaßt sein, da sich die verfügbare Zeit im wesentlichen aus der Länge der Formstücke, gebrochen durch die Extrusionsgeschwindigkeit ergibt.

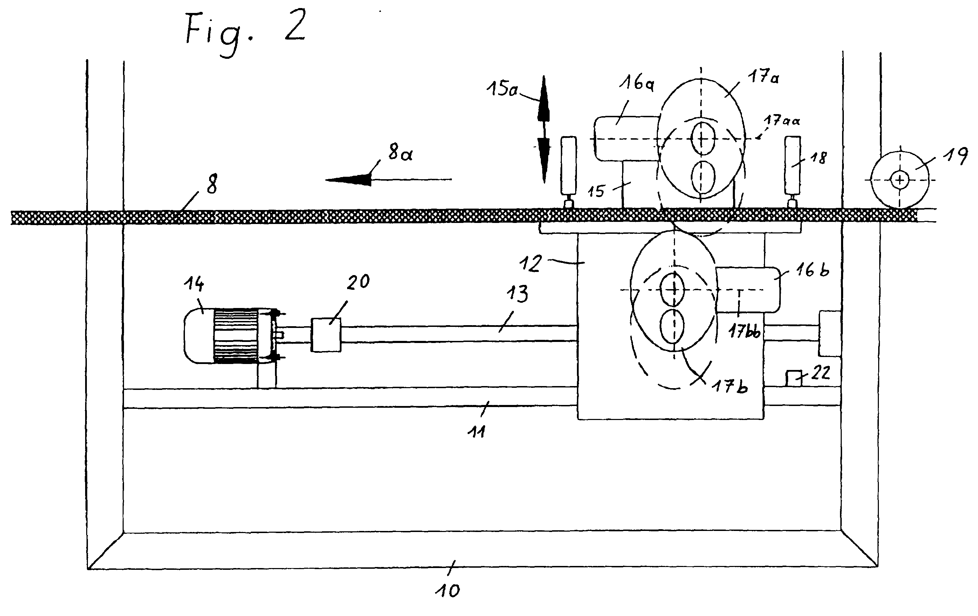

In der Fig. 2 wird eine Ausführungsvariante einer erfindungsgemäßen Vorrichtung in einer seitlichen Ansicht dargestellt. Die Vorrichtung besteht aus einem Grundkörper 10, durch den das Profil 8 hindurchtritt. Parallel zur Längsrichtung des Profils 8 erstreckt sich eine Führungsschiene 11, auf der ein Tisch 12 verschiebbar geführt ist. Das Profil 8 wird in der Richtung des Pfeils 8a bewegt. Die Bewegung des Tisches 12 wird über eine Schraubspindel 13 bewirkt, die von einem Synchronmotor 14 angetrieben ist. Am Tisch 12 ist ein Gerüst 15 vorgesehen, das in vertikaler Richtung hin und her beweglich ist. Fest mit dem Gerüst 15 verbunden sind Elektromotoren 16a und 16b, die jeweils ein Kreissägeblatt 17a und 17b tragen. Die Achsen 17aa bzw. 17bb der Sägeblätter 17a bzw. 17b sind waagrecht. Das Kreissägeblatt 17a ist in seiner Ruhestellung oberhalb des Profils 8 angeordnet, während das Kreissägeblatt 17b unterhalb des Profils 8 liegt. Im Zuge eines Schneidvorganges bewegt sich der Rahmen 15 beispielsweise zuerst nach unten, so daß der erste Schnitt mit dem Kreissägeblatt 17a durchgeführt wird. Diese Stellung ist in der Fig. 2 mit unterbrochenen Linien dargestellt. Dann bewegt sich der Rahmen 15 über die Ruhestellung hinaus nach oben, so daß das Sägeblatt 17b den entsprechenden Schnitt ausführt. Der Doppelpfeil 15a deutet die Bewegung des Gerüsts 15 an. Danach wird wiederum die Ausgangsstellung erreicht. Um jegliche Verschiebung des Profils 8 während des Schneidvorganges zu verhindern, sind pneumatisch betätigte Haltevorrichtungen 18 vorgesehen, die das Profil während des Schneidvorganges in alle Richtungen arretieren. Ein Meßrad 19 überwacht die Bewegung des Profils 8, und ein Drehgeber 20 ist dazu vorgesehen, aufgrund der Drehbewegung der Spindel 13 die jeweilige Position des Tisches 12 genau zu bestimmen.

Eine nicht weiter dargestellte Steuervorrichtung ist mit dem Meßrad 19 und dem Drehgeber 20 verbunden, und verfügt über Daten bezüglich der herzustellenden Formstücke. Der Ablauf eines Arbeitszyklus ist dabei folgendermaßen:

In der in der Fig. 2 dargestellten Stellung des Tisches 12 ist der Schneidvorgang soeben beendet worden. Die Haltevorrichtungen 18 werden gelöst, und der Tisch 12 wird gestoppt und mit größtmöglicher Geschwindigkeit nach links in seine Ausgangsstellung bewegt. Ein Näherungssehalter 22 dient dazu, die Ausgangsstellung exakt anfahren zu können. Aufgrund der Drehung des Meßrades 19 wird der Zeitpunkt bestimmt, zu dem an den Motor 14 das Signal zum Hochfahren gegeben werden muß. Dabei wird eine entsprechende Beschleunigungsrampe eingehalten, die bei der Bestimmung des Startzeitpunktes berücksichtigt wird. Der Motor 14 wird im Anschluß daran so geregelt, daß die Geschwindigkeit des Tisches 12 völlig mit der des Profils 8 übereinstimmt, wie sie vom Meßrad 19 bestimmt wird. Ist dieser Zustand erreicht, dann kann der Schneidvorgang in der oben beschriebenen Weise durchgeführt werden.

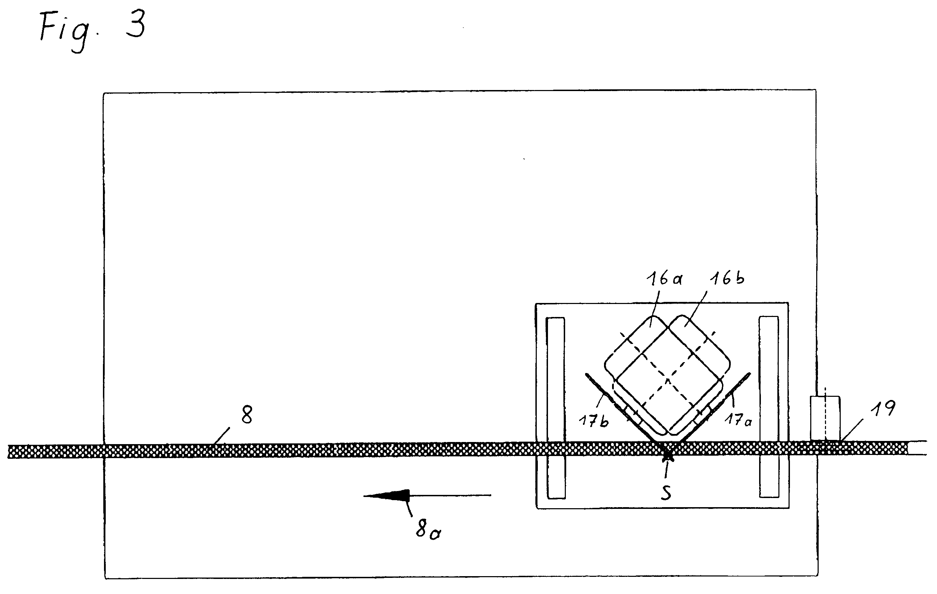

Aus der Fig. 3 ist ersichtlich, daß die Ebenen der Sägeblätter 17a und 17b jeweils um 45 Grad zur Achse des Profils 8 geneigt sind. Dabei liegt die Schnittlinie s dieser beiden Ebenen im Bereich einer Profilkante. Daher ergibt sich der geringstmögliche Materialverlust durch den Schnitt.

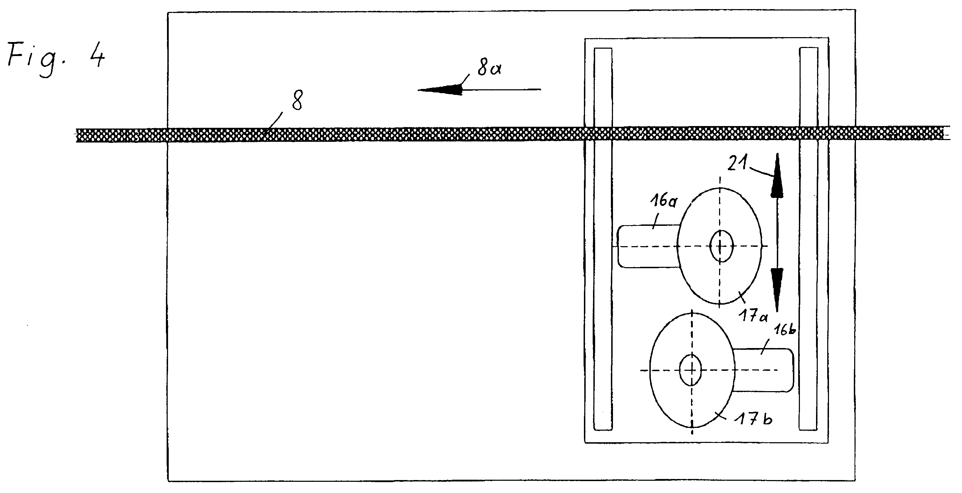

Die Variante von Fig. 4 ist grundsätzlich ähnlich zu der oben beschriebenen Ausführungsvariante aufgebaut. Unterschiedlich ist dabei, daß die Bewegung der Sägeblätter 17a und 17b horizontal in der Richtung des Pfeiles 21 erfolgt. Weiters ist unterschiedlich, daß in der Ruhestellung die Sägeblätter 17a und 17b auf einer Seite des Profils 8 angeordnet sind. Bei der Bewegung in Richtung des Pfeiles 21 führt somit zuerst das Sägeblatt 17a den Schnitt durch und danach das Sägeblatt 17b. Die Variante nach Fig. 4 benötigt seitlich mehr Platz als die oben beschriebene Ausführungsvariante. Andererseits jedoch wird für die Durchführung des Schneidvorganges etwas weniger Zeit benötigt, so daß unter sonst gleichen Bedingungen höhere Extrusionsgeschwindigkeiten möglich sind, oder die Herstellung kürzerer Formstücke möglich wird. Falls jedoch das Extrusionswerkzeug bereits besteht, wird dadurch die erforderliche Schneidrichtung festgelegt.

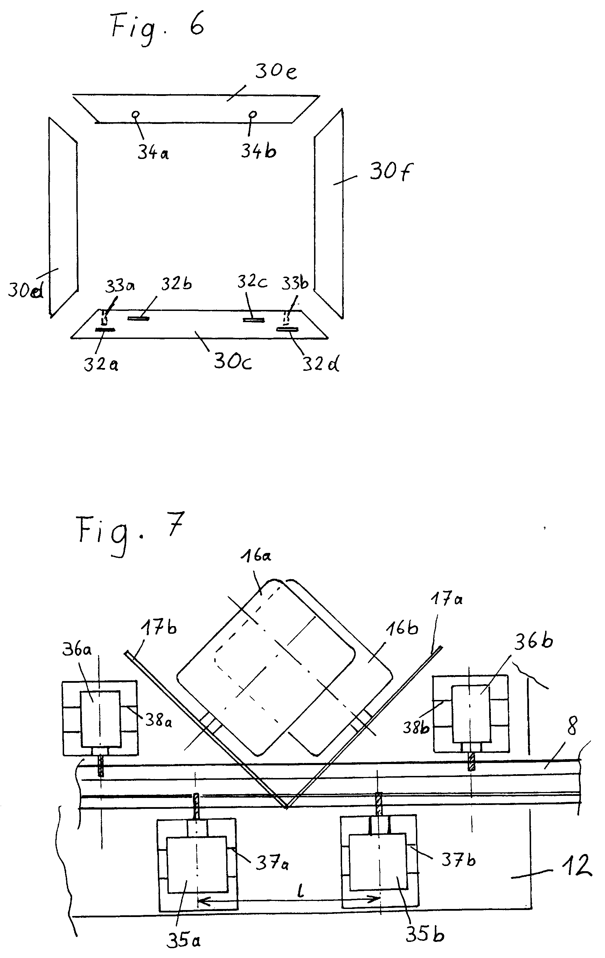

In der Fig.5 ist ein Schnittbereich eines Profils detailliert dargestellt. Das Sägeblatt 17b führt einen Schnitt durch, der die nachlaufende Stirnfläche eines ersten Formstückes 30a bildet, und das Sägeblatt 17a führt einen Schnitt durch, der die vorlaufende Stirnfläche eines zweiten Formstücks 30b bildet. Die Schnittebenen schneiden einander in der Linie s, die im Bereich einer Kante 32 des Profils, d. h. der Formstücke 30a, 30b liegt. Dadurch kann die Größe des Abschnitts 31 minimiert werden.

In der Fig.6 ist der grundsätzliche Aufbau eines Fensterrahmen gezeigt, der aus den Formstücken 30c, 30d, 30e und 30f besteht. Das untere Formstück 30c besitzt Ausfräsungen 32a, 32b, 32c und 32d, die zur Abführung von Wasser dienen. Weiters sind in dem Formstück 30c Bohrungen 33a und 33b vorgesehen, die von dem Falz zur Aufnahme des nicht dargestellten Fensterflügels schräg ins Innere des Profils führen. Das in diese Bohrungen 33a und 33b eindringende Wasser wird über die Schlitze 32a und 32d nach außen abgeführt.

Das Formstück 30e besitzt weiters Belüftungsbohrungen 34a und 34b.

In der Fig.7 sind zwei Bohreinrichtungen 35a und 35b und zwei Fräseinrichtungen 36a und 36b dargestellt, die sich am gleichen Tisch 12 befinden wie die Sägen 16a und 16b. Die Bohreinrichtungen 35a und 35b sind in einem Winkel von 45° zur Waagrechten nach unten geneigt. Die Vorschubbewegung wird in dieser Richtung durchgeführt. Weiters sind die Bohreinrichtungen 35a und 35b auf Schienen 37a und 37b gelagert, die sich parallel zur Axialrichtung des Profils 8 erstrecken. Auf diese Weise kann der Abstand 1 zwischen den Bohrungen verändert werden. Die Fräseinrichtungen 36a und 36b sind als Fingerfräser ausgebildet, um Schlitze parallel zur Axialrichtung des Profils 8 zu fräsen. Führungen 38a und 38b ermöglichen die Bewegung in dieser Richtung.

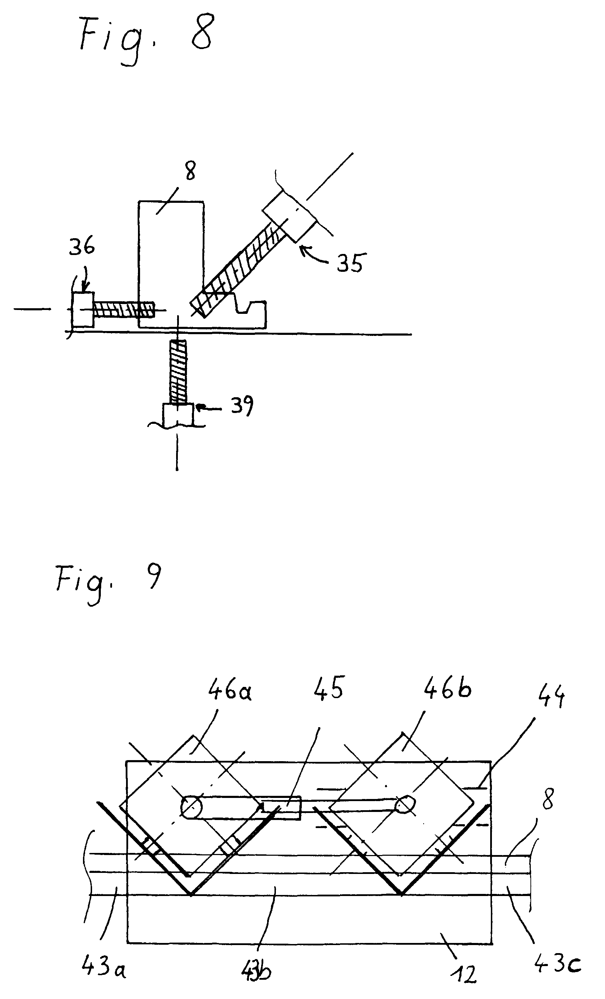

In der Fig. 8 ist eine Ansicht in Axialrichtung dargestellt. Die Bohreinrichtung 35 führt eine Bohrung schräg von oben in das Profil 8 ein. Die Fräseinrichtung 36 fräst Schlitze in die Vorderwand des Profils 8 parallel zur Axialrichtung. Eine weitere Bohreinrichtung 39 stellt Bohrungen an der Unterseite des Profils her.

Da sich die Fräs- und Bohreinrichtungen 35, 36 und 39 auf dem Tisch 12 befinden, ist sichergestellt, daß sie sieh in Axialrichtung grundsätzlich zugleich mit den Sägen 16a und 16b bewegen. Relativ dazu ist jedoch eine zusätzliche Bewegung in Axialrichtung über die Führung 37 und 38 möglich. Die Steuerung der Anlage erfolgt so, daß die Bohr-und Fräsvorgänge gleichzeitig mit den Schneidvorgängen durchgeführt werden. Damit können die zusätzlichen Bearbeitungsvorgänge ohne eine Veränderung der Taktzeit durchgeführt werden.

Die Bohr- und Fräseinrichtungen 35, 36 und 39 können in an sich bekannter Weise druckluftbetrieben oder elektrisch angetrieben sein. Typische Abmessungen eines Schlitzes sind 5mm mal 25mm, eine Bohrung wird mit Durchmesser 6mm oder größer ausgeführt.

Die Fig. 9 zeigt eine weitere Ausführungsvariante der Erfindung, bei der auf einem Tisch 12 zwei Doppelsägen 46a und 46b angeordnet sind. Die Doppelsäge 46b ist auf einer Führung 44 parallel zur Axialrichtung des Profils 8 beweglich. Über eine Verbindungsstange 45 sind die beiden Sägen 46a und 46b gekoppelt. Die Länge der Verbindungsstange 45 ist verstellbar, sodaß der Abstand zwischen den Sägen 46a und 46b einstellbar ist. Bei dieser Ausführungsvariante wird in einem einzigen Arbeitsvorgang ein Formstück 43b hergestellt, das vorlaufende Formstück ist mit 43a bezeichnet, während das nachlaufende Formstück mit 43c bezeichnet ist. Die in der Fig. 9 dargestellte Ausführungsvariante ist besonders für Fälle vorteilhaft, bei denen relativ kurze Formstücke 43b bei hohen Extrusionsgeschwindungkeiten hergestellt werden sollen. Unter solchen Bedingungen kann die Zeit, die für einen Schneidvorgang und für den Rücklauf der Säge benötigt wird, zu kurz sein, um mit einer Einzelsäge den nächsten Schneidvorgang durchführen zu können. Mit der Ausführungsvariante von Fig. 9 wird die zur Verfügung stehende Zeit für Schneidvorgang und Rücklauf zumindest verdoppelt.

In einem typischen Ausführungsbeispiel der vorliegenden Erfindung wird als Extruder ein konischer oder paralleler Doppelschneckenextruder eingesetzt, der ein Profil extrudiert, das aus einem für Fenster geeigneten PVC Material hergestellt ist. Ein typisches Fensterprofil hat etwa eine Profilbreite von 50 mm bis 60 mm bei einer Profilhöhe von 50 mm bis 80mm und einer Wandstärke von 2 mm bis 3 mm. Die Extrusionsgeschwindigkeit beträgt in diesem Beispiel 2,5 m/min. Der Antriebsmotor des Sägetisches 12 ist ein Drehstrom-Synchronmotor mit einer Leistung von 400 W bei einer maximalen Drehzahl von 1400 min⁻¹. Damit ist eine maximale Geschwindigkeit des Sägetisches von 12 m/min erreichbar. Es wird von einer Schnittdauer von etwa 4 sek ausgegangen.

Die vorliegende Erfindung ermöglicht es, die Leistungsfähigkeit einer Anlage zur Herstellung von Kunststoff-Fenstern zu erhöhen, wobei der Produktionsablauf durch Wegfall von Arbeitsschritten vereinfacht wird. Der entstehende Abfall kann minimiert werden.

## Patentansprüche

1. Verfahren zur Herstellung von Formstücken zur Erzeugung von Kunststoff-Fenstern, bestehend aus folgenden Schritten:
- Extrudieren und Kalibrieren einer Kunststoffmasse zu einem Profil (8);
- Zurechtschneiden des Profils (8) in Stücke gewünschter Länge und Durchführung von Gehrungsschnitten zur Anordnung der Stirnflächen des Formstuckes (30a, 30b) in einem bestimmten Winkel zur Profilachse,
**dadurch gekennzeichnet,** daß das Zurechtschneiden durch eine Doppelsäge erfolgt, die mit der Geschwindigkeit des aus der Extrusionsanlage austretenden Profils (8) in der Längsrichtung des Profils (8) bewegt wird, und die die nachlaufende Stirnfläche eines Formstückes in einem Arbeitsgang mit der vorlaufenden Stirnfläche des nächsten Formstückes (30b) unter Berücksichtigung der jeweiligen Gehrungswinkel schneidet.

2. Verfahren nach Anspruch 1, **dadurch gekennzeichnet,** daß aufgrund der Extrusionsbedingungen, der Materialzusammensetzung, des zur Herstellung des Profils (8) verwendeten Kunststoffes und der Lagerungsbedingungen der Formstücke (30a, 30b) ein Schrumpfmaß bestimmt wird, das beim Zurechtschneiden der Formstücke (30a, 30b) berücksichtigt wird.

3. Verfahren nach einem der Ansprüche 1 oder 2, **dadurch gekennzeichnet,** daß die Bewegung des Tisches (12), aufdem die Säge befestigt ist, folgendermaßen gesteuert wird.
- Messen einer Geschwindigkeit, mit der das Profil (8) aus der Extrusionsanlage austritt;
- Beschleunigen des Tisches (12) auf die Extrusionsgeschwindigkeit des Profils (8) und Einregeln der Vorschubgeschwindigkeit des Tisches (12) aufdie Extrusionsgeschwindigkeit;
- Durchführen des Schnittvorganges nach dem Herstellen des Gleichlaufs zwischen dem Tisch (12) und dem Profil (8), wobei durch eine quer zur Profilachse bewegte Doppelsäge die Stirnfläche zweier aufeinanderfolgenden Formstücke (30a, 30b) geschnitten werden;
- Zurückbewegen der Säge in ihre Ausgangsstellung;
- Stoppen und Zurückfahren des Tisches in seine Ausgangsstellung;
- Bestimmen des Startpunktes für das Auslösen des nächsten Schnittvorganges aufgrund der geforderten Länge des jeweiligen Formstückes.

4. Verfahren nach einem der Ansprüche 1 bis 3, **dadurch gekennzeichnet,** daß zusätzlich zu den Gehrungsschnitten ein weiterer Bearbeitungsvorgang erfolgt.

5. Verfahren nach Anspruch 4, **dadurch gekennzeichnet,** daß der zusätzliche Bearbeitungsvorgang darin besteht, daß ein V-förmiger Einschnitt zur Aufnahme eines Kämpfers durchgeführt wird.

6. Verfahren nach einem der Ansprüche 4 oder 5, **dadurch gekennzeichnet,** daß der zusätzliche Bearbeitungsvorgang darin besteht, daß gleichzeitig mit den Gehrungsschnitten Entwässerungsschlitze gefräst werden.

7. Vorrichtung zur Herstellung von Formstücken zur Erzeugung von Kunststoff-Fenstern, die folgende Bauteile aufweist:
- eine Führung (11), entlang der ein von einer Extrusionsanlage extrudiertes Profil (8) durch die Vorrichtung geführt werden kann;
- einen Sägetisch (12), der in der Richtung der Führung (11) hin und her beweglich ist;
- eine auf dem Tisch (12) angeordnete Säge, die quer zur Richtung der Bewegung beweglich ist, um das Profil (8) zu schneiden;
- wobei die Säge als Doppelsäge ausgebildet ist, deren Sägeblätter (17a, 17b) in einem vorbestimmten Winkel zueinander und zur Profilachse angeordnet sind, um die Stirnflächen der Formstucke (30a, 30b) entsprechend der gewünschten Gehrungswinkel zu schneiden,
**dadurch gekennzeichnet,** daß eine Meßvorrichtung (19) zur Bestimmung der Bewegungsgeschwindigkeit des Profils vorgesehen ist, und daß vorzugsweise Mittel zur Durchführung von weiteren Bearbeitungsvorgängen vorgesehen sind.

8. Vorrichtung nach Anspruch 7, **dadurch gekennzeichnet,** daß die Schneidebenen der beiden Sägen (17a, 17b) einen Winkel von 90° zueinander einschließen, und daß die Schnittlinie (s) der Schneidebenen im Bereich der Außenkante (32) des Profils (8) liegt.

9. Vorrichtung nach einem der Ansprüche 7 oder 8, **dadurch gekennzeichnet,** daß die Sägen in einer Richtung relativ zum Tisch (12) bewegbar sind, die parallel zu der Schnittlinie (s) der Schneidebenen der beiden Sägen ist.

10. Vorrichtung nach einem der Ansprüche 7 bis 9, **dadurch gekennzeichnet,** daß am Tisch (12) eine Klemmvorrichtung (18) zum Halten des Profils (8) während der Schnitte vorgesehen ist.

11. Vorrichtung nach einem der Ansprüche 7 bis 10, **dadurch gekennzeichnet,** daß ein Weggeber (20) vorgesehen ist, der zur Bestimmung der jeweiligen Position des Tisches (12) ausgebildet ist.

12. Vorrichtung nach einem der Ansprüche 7 bis 11, **dadurch gekennzeichnet,** daß der Antrieb des Tisches (12) durch einen frequenzgesteuerten Synchronmotor (14) erfolgt.

13. Vorrichtung nach einem der Ansprüche 7 bis 12, **dadurch gekennzeichnet,** daß die als Kreissägen ausgebildeten Sägen in im wesentlichen senkrechter Richtung gegenüber dem Tisch (12) verschiebbar angeordnet sind, daß die Achsen der Kreissägen im wesentlichen waagrecht sind, und daß zwischen den Sägeblättern (17a, 17b) ein Raum vorgesehen ist, durch den das Profil (8) hindurchtreten kann.

14. Vorrichtung nach einem der Ansprüche 7 bis 12, **dadurch gekennzeichnet,** daß die als Kreissägen ausgebildeten Sägen in einer im wesentlichen waagrechten Richtung gegenüber dem Tisch verschiebbar angeordnet sind, und daß die beiden Sägen in einer Ausgangsstellung im wesentlichen neben dem Profil (8) angeordnet sind.

15. Vorrichtung nach einem der Ansprüche 7 bis 14, **dadurch gekennzeichnet,** daß eine Bearbeitungsvorrichtung vorgesehen ist, die die Formstücke unmittelbar nach dem Zurechtschneiden bearbeitet.

16. Vorrichtung nach Anspruch 15, **dadurch gekennzeichnet,** daß für die Säge und die Bearbeitungsvorrichtung (7) eine gemeinsame Steuereinheit vorgesehen ist.

17. Vorrichtung nach einem der Ansprüche 7 bis 13, **dadurch gekennzeichnet,** daß Führungen zur Verschiebung der Sägeblätter quer zur Profilachse vorgesehen sind.

18. Vorrichtung nach einem der Ansprüche 7 bis 17, **dadurch gekennzeichnet,** daß eine der beiden Sägen in eine Richtung normal zur Profilachse verschwenkbar ist.

19. Vorrichtung nach einem der Ansprüche 7 bis 18, **dadurch gekennzeichnet,** daß am Tisch angeordnete Fräseinrichtungen (36) und/oder Bohreinrichtungen (35) vorgesehen sind, die dazu ausgebildet sind, während der Durchführung der Gehrungsschnitte Bohrungen oder Schlitze am Profil anzubringen.

20. Vorrichtung nach Anspruch 19, **dadurch gekennzeichnet,** daß in der Förderrichtung des Profils gesehen jeweils eine Fräseinrichtung (36a) vor und eine Fräseinrichtung (36b) nach den Sägen angeordnet ist.

21. Vorrichtung nach einem der Ansprüche 7 bis 20, **dadurch gekennzeichnet,** daß zwei in Axialrichtung miteinander verbundene Doppelsägen (46a, 46b) vorgesehen sind.

## Claims

1. Process for producing shaped parts for plastic windows, essentially comprising the following steps:
- Extrusion and sizing of a plastic material to form a section (8);
- Cutting the section (8) into parts of a desired length and making mitred cuts such that the end faces of a shaped part (30a, 30b) form a particular angle with the section axis,
**characterized in that** the cutting operation is performed with a double saw, which is moved in longitudinal direction of the section (8) at the speed of the section (8) issuing from the extrusion system, and which cuts the rear end face of one part (30a) and the front end face of the subsequent part (30b) in a single operation, allowing for the appropriate mitre angle.

2. Process as claimed in Claim 1, **characterized in that** a measure for shrinkage is determined, which is derived from the extrusion conditions, composition of the plastic material used for fabrication of the section (8), and the storage conditions of parts (30a, 30b), and which is taken into account when said parts (30a, 30b) are cut into shape.

3. Process as claimed in any of Claims 1 or 2, **characterized in that** the movement of the table (12) on which the saw is mounted, is controlled as following;
- Measuring the rate at which the section (8) issues from the extrusion system;
- Accelerating the table (12) to the extrusion rate of the section (8) and adjusting the feed rate of the table (12) to the extrusion rate;
- Performing the cutting operation after table (12) and section (8) are synchronized, a double saw moving transversely to the section axis and cutting the end faces of two successive parts (30a, 30b);
- Returning the saw to its initial position;
- Stopping and returning the table (12) to its initial position;
- Determining the starting point for initiating the next cutting operation in accordance with the desired length of the respective part.

4. Process as claimed in any of Claims 1 to 3, **characterized in that** an extra processing step takes place in addition to mitre cutting.

5. Process as claimed in Claim 4, **characterized in that** the extra processing step consists in making a V-shaped cut which is designed to receive an alignment piece.

6. Process as claimed in any of Claims 4 or 5, **characterized in that** the extra processing step consists in cutting drainage slits simultaneously with the mitre cuts.

7. Device for producing shaped parts for plastic windows, comprising the following elements:
- a guide rail (11) along which a section (8) issuing from an extrusion system can be advanced through the device;
- a saw table (12) which is movable to and fro in the direction of the guide rail (11);
- a saw mounted on the table (12), which is movable transversely to the direction of advance, to cut the section (8);
- wherein the saw is configured as a double saw whose saw blades (17a, 17b) are positioned at a given angle relative one to the other and to the section axis, in order to cut the end faces of the shaped parts (30a, 30b) at the desired mitre angles,
**characterized in that** a measuring device (19) to determine the rate of movement of the section (8) is provided, and that means are preferably provided for performing further processing steps.

8. Device as claimed in Claim 7, **characterized in that** the cutting planes of the two saws (17a, 17b) are at an angle of 90° relative to each other, and that the intersection line s of the cutting planes is situated on the edge (32) of the section (8).

9. Device as claimed in any of Claims 7 or 8, **characterized in that** the saws are movable relative to the table (12) in a direction parallel to the intersection line s of the cutting planes of the two saws.

10. Device as claimed in any of Claims 7 to 9, **characterized in that** the table (12) is provided with a clamping device (18) for holding the section (8) during cutting.

11. Device as claimed in any of Claims 7 to 10, **characterized in that** an encoder (20) is provided for determination of the respective position of the table (12).

12. Device as claimed in any of Claims 7 to 11, **characterized in that** the table (12) is driven by a frequency-controlled synchronous motor (14).

13. Device as claimed in any of Claims 7 to 12, **characterized in that** the saws configured as circular saws are arranged so as to be movable relative to the table (12) in essentially vertical direction, and that the axes of the circular saws are essentially horizontal, and that a space is provided between the saw blades (17a, 17b) through which the section (8) can pass.

14. Device as claimed in any of Claims 7 to 12, **characterized in that** the saws configured as circular saws are arranged so as to be movable relative to the table (12) in essentially horizontal direction, and that the two saws are arranged in an initial position essentially besides the section (8).

15. Device as claimed in any of Claims 7 to 14, **characterized in that** a tool (7) is provided for tooling the parts immediately after cutting.

16. Device as claimed in Claim 15, **characterized in that** a common control unit is provided for the saw and the tool (7).

17. Device as claimed in any of Claims 7 to 13, **characterized in that** guides are provided for shifting the saw blades transversely to the section axis.

18. Device as claimed in any of Claims 7 to 17, **characterized in that** one of the two saws is tiltable in a direction normal to the section axis.

19. Device as claimed in any of Claims 7 to 18, **characterized in that** milling units (36) and/or drilling units (35) are provided on the table (12), which are designed to cut bores or slits into the section (8) during mitre cutting.

20. Device as claimed in Claim 19, **characterized in that** one milling cutter (36a) is positioned before the saws, and one milling cutter (36b) is positioned after the saws, as seen the the feed direction of the section.

21. Device as claimed in any of Claims 7 to 20, **characterized in that** two double saws (46a, 46b) are provided which are coupled in axial direction.

## Revendications

1. Procédé de production de pièces formées destinées à la fabrication de fenêtres en plastique, comprenant les étapes suivantes, consistant a :
- extruder et calibrer une masse de matière plastique pour former un profilé (8);
- sectionner le profilé (8) en pièces ayant la longueur souhaitée en effectuant une coupure en biais pour conférer aux faces frontales des pièces formées (30a, 30b) un certain angle par rapport à l'axe du profilé,
**caractérisé en ce que** le débitage se fait avec une scie double, qui se déplace à la vitesse du profilé (8) sortant de l'installation d'extrusion dans la direction longitudinale du profilé (8), et en ce que la face arrière d'une pièce profilée dans la direction de travail forme un angle en biais, toujours identique, avec la face avant de la pièce profilée suivante (30b).

2. Procédé selon la revendication 1, **caractérisé en ce que** l'on détermine le retrait des pièces formées débitées (30a, 30b) pour des conditions données de vitesse d'extrusion, pour un agencement donné de l'équipement, pour un plastique donné utilisé pour la fabrication du profilé (8) et pour des conditions données d'entreposage des pièces formées (30a, 30b).

3. Procédé selon la revendication 1 ou la revendication 2, **caractérisé en ce que** la commande de la table (12) est assurée par les opérations consistant a :
- déterminer la vitesse à laquelle le profilé (8) sort de l'installation d'extrusion;
- accélérer la table (12) jusqu'à atteindre la vitesse d'extrusion du profilé (8) et adapter la vitesse d'avancement de la table (12) à la vitesse d'extrusion;
- exécuter l'opération de sectionnement alors que la vitesse de la table (12) est la même que la vitesse du profilé (8), par une scie double mobile perpendiculairement à l'axe du profilé, en formant les faces de deux pièces formées consécutives;
- ramener la scie dans sa position initiale;
- arrêter et retourner la table dans sa position initiale;
- déterminer le point de départ pour déclencher l'opération de sectionnement suivante en fonction de la longueur nécessaire pour chaque pièce profilée.

4. Procédé selon l'une des revendications 1 à 3, **caractérisé en ce qu**'en plus du sectionnement en biais, on effectue une opération de fabrication additionnelle.

5. Procédé selon la revendication 4, **caractérisé en ce que** l'opération de fabrication additionnelle consiste à former un évidement en forme de V pour recevoir une traverse.

6. Procédé selon la revendication 4 ou la revendication 5, **caractérisé en ce que** l'opération de fabrication additionnelle consiste à aménager une fente pour l'évacuation de l'eau, en même temps que l'on effectue l'opération de sectionnement.

7. Installation pour la production de pièces formées pour la fabrication de fenêtres en plastique, comprenant les composants suivants :
- un guide (11) suivant lequel peut être guidé le profilé extrudé (8) dans l'installation d'extrusion;
- une table de sciage (12) qui peut se déplacer vers le guide (11) et s'en éloigner;
- une scie disposée sur la table (12), qui peut se déplacer dans les deux sens perpendiculairement à la direction de mouvement, pour couper le profilé (8);
- dans laquelle la scie est réalisée sous la forme d'une scie double dont les deux lames (17a, 17b) forment un angle prédéterminé l'une par rapport à l'autre et par rapport à l'axe du profilé, de manière à pouvoir couper les faces frontales de la pièce profilée (30a, 30b) à l'angle souhaité,
**caractérisée en ce qu**'une installation de mesure (19) est prévue pour mesurer la vitesse de déplacement du profilé et que, de préférence, des moyens sont prévus pour effectuer des opérations de fabrication additionnelles.

8. Installation selon la revendication 7, **caractérisée en ce** que les plans des deux scies (17a, 17b) forment entre eux un angle de 90 ° et en ce que la ligne d'intersection (s) des plans de sectionnement se trouve au voisinage des arêtes (32) du profilé (8).

9. Installation selon la revendication 7 ou la revendication 8, **caracterisée en ce que** les scies sont déplaçables par rapport à la table (12) suivant une direction qui est parallèle à la ligne d'intersection (s) des deux plans de sectionnement des deux scies.

10. Installation selon l'une des revendications 7 à 9, **caractérisée en ce que** l'on prévoit sur la table (12) des moyens d'immobilisation (18) pour immobiliser le profilé (8) pendant que s'effectue le sectionnement.

11. Installation selon l'une quelconque des revendications 7 à 10, **caractérisée en ce qu**'on prévoit un indicateur de rotation (20) qui est utilisé pour la détermination des différentes positions de la table (12).

12. Installation selon l'une des revendications 7 à 11, **caractérisée en ce que** l'entraînement de la table (12) se fait avec un moteur synchrone (14) commandé par la fréquence.

13. Installation selon l'une des revendications 7 à 12, **caractérisée en ce que** les scies réalisées sous la forme de scies circulaires sont agencées pour pouvoir être déplacée essentiellement perpendiculairement à la table (12), en ce que les axes des scies circulaires sont essentiellement horizontaux et en ce que entre les lames des scies (17a, 17b), il y a un espacement, par lequel peut passer le profilé (8).

14. Installation selon l'une des revendications 7 à 12, **caractérisée en ce que** les scies réalisées sous la forme de scies circulaires, sont agencées pour être déplaçables suivant une direction essentiellement horizontale par rapport à la table et en ce que les deux scies dans la position initiale sont disposées essentiellement à côté du profilé (8).

15. Installation selon l'une des revendications 7 à 14, **caractérisée en ce qu**'une installation est prévue qui effectue des opérations sur les pièces formées directement après le sectionnement.

16. Installation selon la revendication 15, **caractérisée en ce que** l'on prévoit pour la scie et pour l'installation de fabrication (7) une unité de commande unique.

17. Installation selon l'une des revendications 7 à 13, **caractérisée en ce que** l'on prévoit des guides pour déplacer les lames des scies transversalement par rapport à l'axe du profilé.

18. Installation selon l'une des revendications 7 à 17, **caractérisée en ce que** l'une des deux scies peut être tournée vers une position perpendiculaire à l'axe du profilé.

19. Installation selon l'une des revendications 7 à 18, **caractérisée en ce que** l'installation de fraisage (36) et/ou l'installation de perçage (35) disposées sur la table sont réalisées de manière à ce que, pendant l'exécution de l'opération de sectionnement en biais, on réalise des perçages ou des fentes.

20. Installation selon la revendication 19, **caractérisée en ce que** l'on prévoit, dans la direction d'avancement du profilé, une installation de fraisage (36a) avant les scies et une installation de fraisage (36b) après les scies.

21. Installation selon l'une des revendications 7 à 20, **caractérisée en ce que** l'on prévoit deux scies doubles (46a, 46b) liées ensemble dans la direction axiale.
